# FASCICULE DE BREVET EUROPEEN

(11) **EP 3 942 666 B1**
(45) Date de publication et mention de la délivrance du brevet: **11.01.2023**
(21) Numéro de dépôt: 20709648.8
(22) Date de dépôt: 10.02.2020
(51) Int. Cl.: H02J 7/00, G01R 31/367, G01R 31/396, H02J 7/04, B60L 53/10, B60L 58/24

(54) **PROCEDE DE CONTROLE DE CHARGE D'UN MODULE DE BATTERIE RECHARGEABLE AU MOYEN D'UN ALGORITHME DE PROGRAMMATION DYNAMIQUE**
VERFAHREN ZUR STEUERUNG DER AUFLADUNG EINES WIEDERAUFLADBAREN BATTERIEMODULS MITTELS EINES DYNAMISCHEN PROGRAMMIERALGORITHMUS
METHOD FOR CONTROLLING THE CHARGING OF A RECHARGEABLE BATTERY MODULE BY MEANS OF A DYNAMIC PROGRAMMING ALGORITHM

(30) Priorité: 20.03.2019 FR 1902850
(43) Date de publication de la demande: 26.01.2022
(73) Titulaire: PSA Automobiles SA, 78300 Poissy (FR)
(72) Inventeur: WAHL, Antonin, 45000 ORLEANS (FR); BAGHDADI, Issam, 78600 LE MESNIL LE ROI (FR); DE FLAUGERGUES, Vincent, 86000 POITIERS (FR)
(86) Numéro de dépôt international: PCT/FR2020/050231
(87) Numéro de publication internationale: WO 2020/188163

(56) Documents cités:
- WO-A1-2013/173195
- FR-A1- 2 983 354
- FR-A1- 3 013 151
- FR-A1- 3 016 737

## Description

Le domaine de l'invention concerne un procédé de calcul d'un profil de charge d'un système de batterie rechargeable, en particulier pour la charge d'un véhicule électrique.

A ce jour, l'autonomie des véhicules électriques est encore inférieure par rapport aux véhicules thermiques. Pour des trajets de longue distance, les constructeurs de véhicules automobiles cherchent à limiter les contraintes d'autonomie et dans ce but visent à proposer des solutions de recharge permettant de charger complètement une batterie durant les vingt minutes de pause recommandée toutes les deux heures de roulage.

Dans ce but, il est connu de mettre en œuvre des protocoles de charge à courant de charge constant. Toutefois, les profils de charge à courant constant qui sont proposés jusqu'à maintenant se basent sur des paramètres internes du système de batterie théoriques qui restent constants durant la charge et qui sont valables pour un état initial prédéterminé. Or, en situation de roulage réel, les conditions d'environnement et du véhicule peuvent varier des conditions théoriques. Ces différences peuvent nuire à l'intégrité de la batterie et accélérer le vieillissement de la batterie.

On connait de l'état de la technique le document EP2276139A2 proposant une méthode de charge rapide d'un système de batterie alternant des phases de charge successives à courant continu constant et à tension constante afin d'augmenter le courant de charge pour réduire le temps de charge tout en évitant de dégrader l'état de la batterie. Plus précisément, le modèle mathématique de la batterie comprend une composante fonctionnelle variable en fonction de l'état de charge permettant d'abaisser la tension de charge pour empêcher le phénomène de placage du lithium couramment désigné par le terme anglophone « Lithium Plating ».

Une stratégie alternative est décrite dans le document US2017/0267116A1 où le procédé de commande d'une charge électrique prend en compte les habitudes de roulage du conducteur pour adapter le niveau de charge cible. Plus précisément, selon cette solution des phases de freinage régénératif préalablement enregistrées en mémoires lors des trajets quotidiens pourront être anticipées pour déterminer un profil de charge optimisé dans la mesure où la quantité d'énergie rechargée est adaptée en fonction du profil de roulage attendu. De plus, une régulation thermique du système de batterie est effectuée pour opérer la recharge dans des conditions thermiques optimales.

Une autre stratégie développée dans l'état de la technique est représentée par les documents FR2983354 et FR3013151 décrivant l'utilisation de la température de la batterie pour réguler la charge.

Par ailleurs, les protocoles de charge dits rapides, fonctionnant sur des bornes recharge d'une puissance électrique de 350kW (borne ultra rapide) et délivrant des courants de charge pouvant atteindre 400A, entrainent un vieillissement prématuré des cellules de batterie résultant notamment de la montée en température des cellules. Les solutions décrites précédemment sont prévues pour exploiter le courant maximal des bornes ultra rapides, et par conséquent au détriment d'un vieillissement accéléré du système de batterie.

De plus, lorsqu'une charge rapide est déclenchée dans des conditions de température élevée, les mécanismes de protection limitent le courant de charge, augmentant par conséquent le temps de recharge du fait de la saturation. En particulier, les procédés de charge connus de l'état de la technique ne prennent pas en compte les conditions initiales pour aboutir à une charge complète dans une durée satisfaisante.

Il existe donc un besoin de palier les problèmes précités. Un objectif de l'invention de proposer un procédé de contrôle de charge amélioré permettant d'adapter le profil de charge en fonction des conditions initiales de charge pour garantir un niveau de recharge prédéterminé dans une durée contrainte. Un autre objectif de l'invention est de limiter les phénomènes de saturation prématurés lors d'une charge rapide. Un autre objectif de l'invention est de proposer un procédé de charge permettant à un utilisateur de contrôler le vieillissement d'un système de batterie d'un véhicule résultant des charges rapides.

Plus précisément, l'invention concerne un procédé de charge électrique d'un module de batterie rechargeable comportant la détermination d'un plan de charge et la commande d'une consigne de courant de charge en fonction dudit plan de charge. Selon l'invention, le procédé comporte en outre les étapes successives suivantes :
- a) l'enregistrement dans une mémoire d'un découpage discrétisant une plage de charge du module de batterie sous la forme d'un maillage en deux dimensions selon un pas de température et un pas d'une variable d'évolution de la charge électrique,
- b) le calcul, pour chaque point du maillage, de valeurs de courant de charge unitaire correspondant chacune à un changement d'état de température du module de batterie vers chacun des points adjacents selon le pas de la variable d'évolution de la charge,
- c) le calcul pour chaque dit point d'au moins un plan de charge définissant une suite de valeurs de courant de charge unitaire depuis un point initial prédéterminé vers chaque dit point,
- d) le calcul d'un critère d'optimisation pour chaque plan de charge dépendant de la variation de température du module de batterie pour ledit plan de charge, le critère d'optimisation permettant de sélectionner un plan de charge optimal,
- e) la sélection en fonction du critère d'optimisation, pour chaque point du maillage, du plan de charge optimal définissant une suite de valeurs de courant de charge unitaire,
- f) l'enregistrement dans une table de consigne de courant de charge, pour chaque point du maillage, de la dernière valeur de courant de charge unitaire de la suite de valeurs du plan de charge optimal,
- g) lors de la charge du module de batterie, la détermination de la consigne de courant de charge par lecture de ladite table en fonction de l'état instantané du module de batterie correspondant à chaque dit point.

Selon une variante, la sélection e) du plan de charge optimal de chaque point est fonction en outre d'un coefficient de réglage de la durée de charge dudit plan de charge par rapport à un niveau de vieillissement du module de batterie lors de la charge dudit plan de charge.

Selon une variante, le coefficient de réglage est dépendant d'un compteur de charge activé en cas de détection de l'activation d'un mode de charge prédéterminé dit de charge rapide.

Selon une variante, le coefficient de réglage est dépendant en outre d'au moins un paramètre d'état du module de batterie représentatif du vieillissement du module de batterie.

Selon une variante, le coefficient de réglage est dépendant en outre d'un paramètre configurable manuellement par l'utilisateur du module de batterie permettant de modifier la durée de charge du plan optimal sélectionné et le niveau de vieillissement.

Selon un premier mode de réalisation, chaque point du maillage correspond à une valeur de température du module de batterie et à une valeur d'état de charge du module de batterie et le critère d'optimisation est une variable représentative de la durée du plan de charge relativement à la variation de température du plan de charge.

Selon une variante du premier mode de réalisation, la table de consigne de courant est une cartographie délivrant une valeur de consigne de courant en fonction de la température et de l'état de charge instantanés du module de batterie en charge.

Selon une variante du premier mode de réalisation, le plan de charge optimal de chaque point du maillage est un plan de charge inverse dans lequel le point initial a une valeur d'état de charge comprise entre 70% et 100% d'état de charge du module de batterie, et de préférence 80% d'état de charge.

Selon une deuxième mode de réalisation du procédé, chaque point du maillage correspond à une valeur de température du module de batterie et à une valeur de durée de charge du module de batterie à partir d'un instant de déclenchement de la charge, et le critère d'optimisation est une variable représentative de la variation de quantité d'énergie du plan de charge relativement à la variation de température dudit plan de charge.

Selon une variante du deuxième mode de réalisation, la table de consigne de courant est un vecteur de consigne délivrant une valeur de consigne de courant en fonction de l'état de charge instantané du module de batterie en charge.

Selon une variante, le courant de charge unitaire de chaque point vers un point adjacent est calculé en fonction d'un modèle électrique prédéterminé du module de batterie et de limites de courant de charge imposées au module de batterie lors du changement d'état de température du module de batterie de chaque dit point vers ledit point adjacent. Le courant de charge unitaire est constant sur un pas de la variable d'évolution de charge, sur un pas d'état de charge conformément au premier mode de réalisation ou un pas de durée de charge conformément au deuxième mode de réalisation.

Selon une variante, le procédé comporte l'enregistrement en mémoire du critère d'optimisation du plan de charge optimal de chaque point du maillage, et la sélection du plan de charge optimal de chaque point est fonction du critère d'optimisation des points précédents à chaque dit point du plan de charge optimal. Le procédé réutilise ainsi les calculs d'optimisation déjà exécutés pour les points précédents du maillage.

L'invention concerne également un calculateur de contrôle d'une charge électrique d'un module de batterie, comportant un module de calcul de mise en œuvre d'un algorithme récursif dit de programmation dynamique configuré pour exécuter au moins les étapes a) à f) du procédé de charge selon l'un quelconque des modes de réalisation précédents pour l'enregistrement d'une table de consigne de courant de charge dans une mémoire du calculateur et permettant, lors de la charge du module de batterie, de déterminer la consigne de courant de charge par lecture de ladite table en fonction de l'état instantané du module de batterie.

L'invention concerne également un véhicule automobile comportant un système de batterie, lequel est muni dudit calculateur de contrôle d'une charge d'un module de batterie du système de batterie.

L'invention concerne également un véhicule automobile comportant un système de batterie muni d'un calculateur de contrôle d'une charge d'un module de batterie du système de batterie, dans lequel le calculateur comporte une mémoire dans laquelle est enregistrée la cartographie délivrée par le procédé selon l'une quelconque des variante dudit premier mode de réalisation du procédé, et comporte une interface de communication avec une borne de recharge, le calculateur étant configuré pour délivrer une consigne de courant de charge à la borne de recharge par lecture de ladite cartographie en fonction des paramètres instantanés de l'état de charge et de la température du système de batterie.

L'invention concerne également un produit programme-ordinateur comprenant des instructions qui, lorsque le programme est exécuté par une unité de commande d'un système de batterie, conduisent celui-ci à mettre en œuvre l'un quelconque des modes de réalisation du procédé de charge du module de batterie selon l'invention.

La mise en œuvre d'un algorithme d'optimisation dit de programmation dynamique pour la détermination d'un profil de charge optimal est remarquable en ce qu'il permet de délivrer une consigne de courant charge optimale au regard d'une contrainte de durée de charge et/ou d'une contrainte de vieillissement acceptable. Par ailleurs, le procédé de charge adapte la consigne de courant de charge en fonction des conditions initiales de température et d'état de charge du module de batterie afin d'opérer une recharge du module de batterie dans une durée optimale pour atteindre un état de charge cible. Grâce au procédé de charge, le système de batterie pilote judicieusement la consigne de courant de charge pour empêcher les phénomènes de saturation et limitation de courant résultant d'une montée en température importante du module de batterie.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig.1] représente un diagramme fonctionnel d'un système de batterie rechargeable selon l'invention.
[Fig.2] représente un diagramme fonctionnel d'un module de contrôle du courant de charge selon un premier mode de réalisation du procédé dit mode de calcul hors ligne.
[Fig.3] représente un synoptique du procédé de charge d'un module de de batterie selon l'invention permettant de délivrer des consignes de courant de charge déterminées conformément à un algorithmique d'optimisation dit de programmation dynamique.
[Fig.4] représente schématiquement une partie d'un maillage d'une plage de charge de la batterie lors de l'exécution du premier mode de réalisation du procédé.
[Fig.5] représente un modèle électrique du système de batterie mis en œuvre pour le calcul des courants de charge lors de l'exécution du procédé de charge selon l'invention.
[Fig.6] représente schématiquement le maillage de la plage de charge de la batterie où sont représentés des plans de charge entre un point initial et un point cible final calculés selon le premier mode de réalisation du procédé de charge selon l'invention.
[Fig.7] représente schématiquement un exemple d'une cartographie de profil de charge optimal calculée à partir du premier mode de réalisation selon l'invention.
[Fig.8] sont des graphiques illustrant le pilotage du courant de charge et l'évolution de température d'un système de batterie lors d'une phase de test de mise en œuvre du procédé de charge selon l'invention.
[Fig.9] représente un diagramme fonctionnel d'un module de contrôle du courant de charge selon un deuxième mode de réalisation du procédé dit mode de calcul en ligne.
[Fig.10] représente schématiquement une partie d'un maillage d'une plage de charge de la batterie lors de l'exécution du deuxième mode de réalisation du procédé.
[Fig. 11] représente schématiquement un vecteur de courant de charge optimal en fonction de valeur d'état de charge du système de batterie.

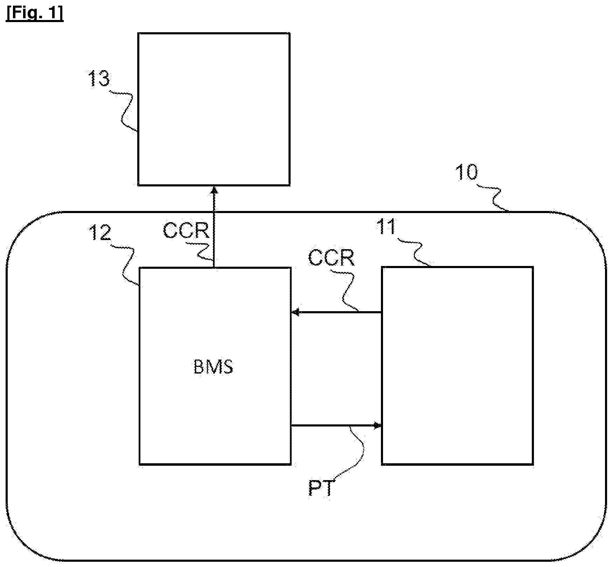

La figure 1 décrit schématiquement un système de batterie 10 équipé d'un module de batterie constitué d'une cellule de batterie ou de plusieurs cellules de batterie. Le système est spécifiquement configuré pour mettre en œuvre le procédé de charge selon l'invention. L'invention sera décrite ici à titre d'exemple pour une application de véhicule automobile électrique rechargeable. L'invention s'applique bien entendu à tout type d'application industrielle comprenant un système de batterie rechargeable à une borne de recharge.

Typiquement, dans l'exemple décrit ici, le véhicule comporte un système de batterie comprenant un module de batterie muni de plusieurs cellules électriques, par exemple de technologie lithium-ion, connectées électriquement en architecture série et/ou parallèle au moyen d'un ou plusieurs sous-systèmes de batterie. Le procédé s'applique avantageusement pour les systèmes de batterie de puissance pouvant accepter des tensions de charge comprise entre 200V et 500V, voire jusqu'à 1000V, en particulier pour les charges que l'on désignera dans la description par « charge rapide ». On notera néanmoins que le procédé n'exclut pas de s'appliquer à la charge d'une cellule de batterie individuelle.

Le système de batterie 10 comporte une unité de commande 12, (couramment désignée par l'acronyme BMS pour « Battery Management System » en anglais), de type calculateur à circuit intégré, comportant une interface de recharge destinée à coopérer avec une borne de recharge 13 externe au véhicule connectée à un réseau électrique. Par exemple, la borne de recharge 13 est prévue pour fonctionner selon une tension de recharge compatible de classes de puissance normalisées allant de 10kW à plus de 350kW : FC10, FC20, FC50, HPC150, HPC250, HPC350. Plus précisément, l'interface de recharge du système de batterie 10 du véhicule est prévue pour fonctionner à des tensions électriques comprises au moins entre 200V et 1000V et pouvant supporter des courants électriques maximums de 500A environ. L'interface de recharge est, par exemple, compatible des normes DIN SPEC 70121 (« Électromobilité - Communication digitale entre la borne de recharge à courant continu et le véhicule électrique pour régler la charge à courant continu dans le système de charge combiné ») et ISO 15118 (« Véhicules routiers - Interface de communication entre véhicule et réseau électrique »).

Comme indiqué plus haut, l'invention propose de mettre en œuvre un procédé de charge permettant de délivrer une consigne de courant de charge CCR conformément à un profil de charge optimal obtenu par un algorithmique d'optimisation, par exemple de programmation dynamique selon l'acronyme DP (et couramment désigné en anglais par « Dynamic Programming Algorithm Optimization »). Un algorithme d'optimisation DP permet de déterminer un courant de charge optimal, au regard d'un ou plusieurs critères d'optimisation imposés. Les critères d'optimisation sont par exemple la durée de charge, la quantité d'énergie à charger dans une durée déterminée, ou bien encore le vieillissement du module de batterie lors de la charge électrique.

Cette mise en œuvre peut se faire au moyen d'un module de calcul 11 pour piloter le courant de charge, lequel module de calcul 11 est configuré pour délivrer la consigne de courant de charge CCR en fonction au moins de paramètres instantanés d'état PT du module de batterie en charge délivrés par l'unité de commande 12. Bien entendu, d'autres paramètres inhérents au fonctionnement du véhicule peuvent être pris en compte, comme par exemple les capacités de régulation thermique du système de batterie.

Le module de calcul 11 peut être installé au sein du système de batterie 10 au moyen d'un calculateur dédié au calcul de la consigne de courant de charge CCR, coopérant avec l'unité de commande 12 comme cela est représenté en figure 1. Néanmoins, ce mode d'implémentation n'est pas obligatoire. Il est envisageable que les fonctions mises en œuvre par le module de calcul 11 soient intégrées à l'unité de commande 12 BMS, ou bien encore soient externes au système de batterie 10, par exemple au sein d'une unité de commande du véhicule, tel le calculateur d'un moteur thermique dans le cas d'un véhicule hybride, le calculateur d'une machine électrique de traction ou d'un calculateur de supervision du véhicule. Dans ces derniers modes d'implémentation, la consigne de courant CCR est délivrée directement à la borne de recharge 13, sans passerelle via l'unité de commande 12 du BMS. Par conséquent, le module de calcul 11, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels ».

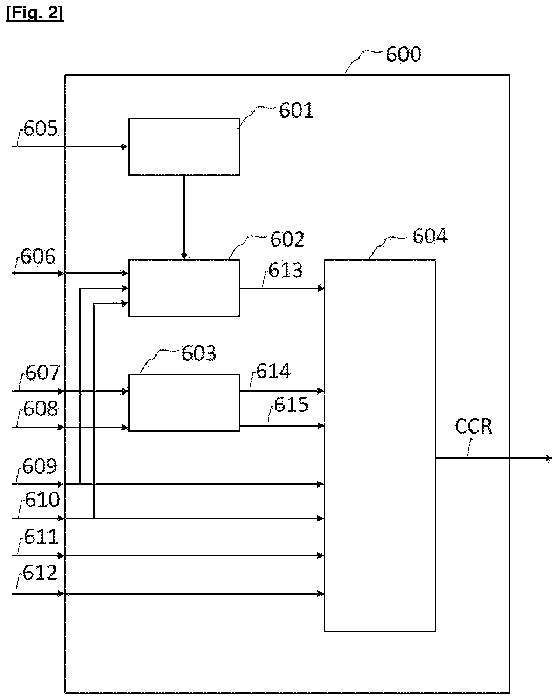

La figure 2 décrit maintenant plus précisément un bloc fonctionnel 600 réalisant les fonctions mises en œuvre par le module de calcul 11 pour opérer un premier mode de réalisation du procédé de charge selon l'invention, dit mode de calcul hors ligne. Selon ce mode de calcul les valeurs des courants de charge optimaux d'un profil de charge, enregistré sous la forme d'une table, matrice ou cartographie en mémoire d'un calculateur, sont calculés indépendamment du déclenchement d'une charge électrique et des conditions initiales du module de batterie à l'instant de la charge. Par exemple, le procédé prévoit que le profil de charge optimal puisse être calculé par le module de calcul 11 sous requête, en usine lors de la fabrication du véhicule, ou à tout instant postérieur à la vente en cours de vie du véhicule, de manière embarquée par le module de calcul 11 à bord du véhicule.

On n'exclut pas non plus que le profil optimal puisse être déterminé par un module de calcul distant accessible via une interface de communication (centre de gestion après-vente d'un véhicule, usine, plateforme de gestion en ligne, ou bien encore concessionnaire par exemple). Ce dernier cas présente l'avantage d'éviter d'embarquer les ressources de calcul au sein du véhicule pour la mise en œuvre de l'algorithme d'optimisation DP. Par conséquent, tout ou partie des étapes du procédé sont prévues pour être opérées par le module de calcul du véhicule ou en coopération avec un module de calcul externe au véhicule.

Plus précisément, le bloc fonctionnel 600 reçoit en entrées des données référencées 605 à 612 délivrées par le système de batterie du véhicule. Le bloc 600 comporte un premier bloc fonctionnel 601 opérant la fonction de compteur de charge rapide exécutées par le système de batterie. Le bloc 601 compte le nombre de charge rapide exécutée par le système de batterie au cours de la durée de vie du système de batterie. Le compteur en fonction de sa valeur permet d'évaluer un niveau de vieillissement des cellules de batterie résultant de l'activité électrique liée aux charges rapides (montée en température et courants de charge élevés notamment).

Le bloc fonctionnel 600 comporte en outre un deuxième bloc fonctionnel 602 délivrant un coefficient de réglage 613 de la durée de charge par rapport à un niveau de vieillissement subi par le module de batterie en charge, en fonction notamment de l'information délivrée par le compteur 601 de charge rapide, d'un paramètre 606 configurable manuellement par l'utilisateur du système de batterie (via une interface homme machine, le tableau de bord du véhicule par exemple) permettant de modifier la durée de charge et le niveau de vieillissement subi par le système de batterie lors de la recharge, d'un ou plusieurs paramètres 609, 610 représentatif de l'état de vieillissement du système de batterie, par exemple la donnée relative de la résistance interne 609 des cellules du système de batterie et/ou la donnée relative à la capacité de charge totale 610 du système de batterie. On entend par niveau de vieillissement l'altération subie par les cellules du système de batterie lors de l'exécution de la charge rapide, altération du fait du courant de charge élevé et de la brusque montée en température. Les paramètres d'état de vieillissement sont déterminés par des fonctions d'analyse et de diagnostic connues de l'homme du métier et embarquées au sein de l'unité de commande du système BMS.

Par exemple, le coefficient de réglage est configurable dans une plage de valeurs comprise entre 0 et 1, une valeur à 1 optimisant la durée de charge et une valeur à 0 réduisant le niveau vieillissement en contrepartie d'une durée de charge plus élevée, les valeurs intermédiaires pilotant un compromis entre durée de charge et niveau de vieillissement. Comme on le verra dans la suite de la description, le coefficient de réglage 613 définit quel plan de charge sera sélectionné après le calcul de tous les plans de charge possibles en fonction de la valeur du critère d'optimisation de chaque plan de charge. Ce coefficient n'impacte pas directement le calcul des courants de charge unitaire.

Le bloc 600 comporte en outre un troisième bloc fonctionnel 603 ayant pour fonction de délivrer une valeur d'état de charge SOC instantané 614 et une valeur de température instantanée du système de batterie 615 en fonction des données reçues en entrée 607, 608 de chaque cellule constituant le système de batterie. En particulier, le courant de charge optimal sera limité par la cellule dont l'état de charge SOC est le plus élevé, par la cellule dont la température est maximale et par la cellule dont la température est minimale.

Enfin, le bloc 600 comporte en outre le quatrième bloc fonctionnel 604 ayant pour fonction de délivrer la consigne de courant de charge optimal CCR conformément au procédé de charge selon l'invention. Dans ce but, le bloc 604 reçoit en entrée la valeur du coefficient de réglage 613, les valeurs d'état de charge SOC 614 et de température des cellules 615, les valeurs d'état de vieillissement du système de batterie 609, 610, ainsi que la donnée 611 relative au courant de charge maximal délivrable par la borne de recharge et la donnée relative à la température eau, qui est par exemple une variable fixe.

Dans une variante préférentielle du premier mode de réalisation, le bloc 604 contient, enregistrée dans une mémoire de l'unité de commande du système de batterie, une cartographie sous la forme d'une table de consigne de courant CCR délivrant une valeur de consigne de courant en fonction de la température 614 et de l'état de charge instantané 615 sélectionnés par le bloc 603. Plus précisément, la cartographie est élaborée par le bloc 604 en opérant la totalité des étapes de calcul de manière embarquée au sein du véhicule ou par un module de calcul externe, comme décrit précédemment pour éviter l'intégration des ressources de calcul spécifiques à la mise en œuvre de l'algorithme DP au sein du système de batterie.

On ajoutera que le premier et deuxième bloc 601, 602 ne sont pas indispensables. Ils permettent avantageusement de régler les valeurs de la consigne de courant de charge en fonction d'un niveau de vieillissement et/ou d'un paramètre de configuration décidé par l'utilisateur pour adapter la durée de charge en fonction de l'impact de la charge rapide. Toutefois, dans une variante simplifiée, il est envisageable que le procédé de charge délivre les consignes CCR optimales sans prise en compte du vieillissement.

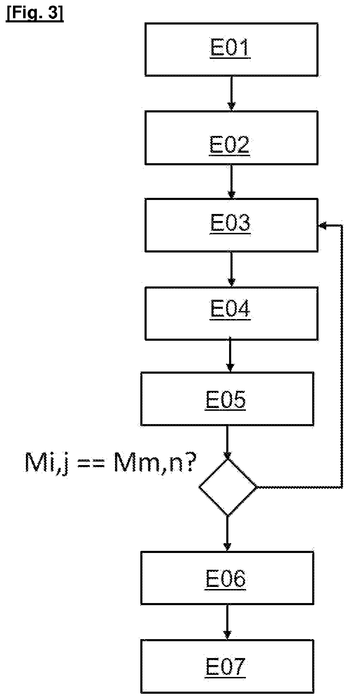

En figure 3, on décrit maintenant un algorithme du procédé exécutant un premier mode de réalisation du procédé de charge dit mode hors ligne. A une première étape E01, le procédé de charge comporte une première étape d'enregistrement, dans une mémoire de l'unité de commande du BMS, d'un découpage discrétisant une plage de charge du module de batterie sous la forme d'un maillage en deux dimensions selon un pas de température et un pas d'une variable d'évolution de la charge électrique. Dans ce premier mode de réalisation, la variable d'évolution de la charge électrique du module de batterie utilisée dans le maillage est l'état de charge du module de batterie. Le pas de température et le pas d'état de charge sont constants sur l'ensemble de la plage de charge.

Néanmoins il n'est pas exclu que le pas soit variable de manière à obtenir une précision plus fine du contrôle de courant de charge pour des zones de charge électrique spécifiques.

Le maillage présente l'avantage de diviser la plage de charge de grande amplitude du système de batterie en une pluralité de mailles de faible amplitude pour chacune desquelles un courant de charge optimal est calculé. Chaque maille définit une variation de température du module de batterie en charge entre deux valeurs de température par rapport à une variation d'état de charge entre deux valeurs d'état de charge SOC. La maille est délimitée par des points de maillage associés chacun à une valeur de température et d'état de charge SOC. La variation peut être désignée par le terme finesse, résolution ou pas de maillage. Ensuite, à partir de l'algorithme d'optimisation DP et des valeurs de courant optimaux au regard d'un critère d'optimisation prédéterminé, le procédé sélectionne un plan de charge optimal pour l'ensemble de la plage de charge.

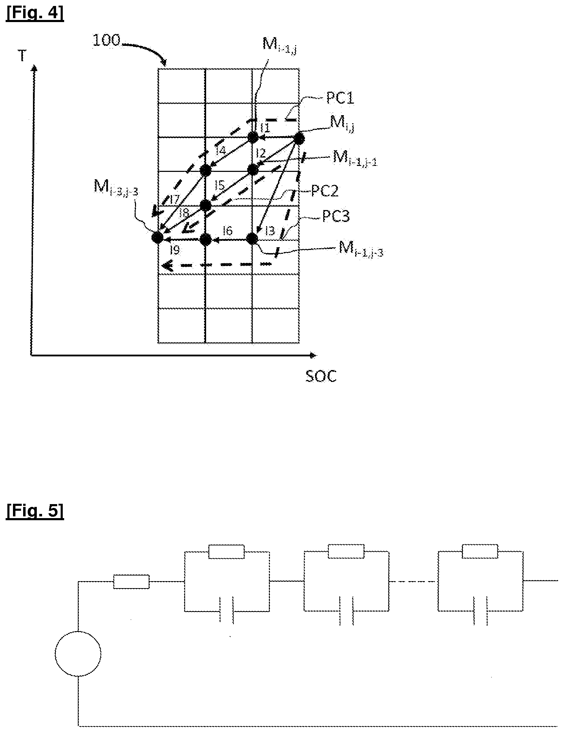

En figure 4, on a représenté schématiquement et de manière simplifiée une partie du maillage 100 dans lequel des valeurs d'état de charge SOC sont représentées sur l'axe des abscisses et des valeurs de température T sont représentées sur l'axe des ordonnées. Chaque point Mi, j est associée à une plage de température du module de batterie en charge ainsi qu'à une plage d'état de charge du module de batterie. Le maillage couvre la plage de charge du module de batterie, définie par exemple entre des températures comprises entre 25° et 45° et des états de charge SOC comprisentre 5% et 90% de la capacité totale du système de batterie. D'autres plages de charge sont envisageables selon les besoins recherchés, généralement une plage d'état de charge s'étendant entre 10% et 80% de la capacité totale du système suffit à couvrir les besoins d'autonomie du véhicule.

Le pas du maillage peut être de quelques dixièmes de degrés Celsius, par exemple entre 0,5 et 1 degrés Celsius, et sur l'axe des états de charge SOC de quelques dixièmes de pourcent d'état de charge SOC, par exemple entre 0,5% et 5% de SOC. On comprendra que la résolution du maillage choisie n'est aucunement limitative et dépend notamment des performances recherchées et des ressources de calcul et de mémoire disponibles, en particulier lorsque le calcul d'optimisation est embarqué au sein du véhicule.

Ensuite, à une deuxième étape E02 du procédé de charge, et illustrée par la figure 4, le procédé comporte le calcul, pour chaque point Mi,j, de valeurs de courant de charge unitaire I1, I2, I3 associées chacune à un changement d'état de température du module de batterie vers chacun des points adjacents Mi-1,j ;Mi-1,j-1 ;Mi-1,j-3 respectivement audit point Mi,j selon le pas d'état de charge.

Plus précisément, la valeur d'un courant de charge unitaire I1, I2, I3 est constante sur le pas d'état de charge du maillage pour un changement d'état d'une ou plusieurs mailles en température.

A des fins de simplification, la figure 4 représente uniquement le calcul des valeurs de courant unitaire I1 à I9 constituant trois plans de charge PC1, PC2, PC3 entre un point initial Mi,j et un point cible Mi-3,j-3. Toutefois, la mise en œuvre du procédé de calcul est réalisée pour tous les points adjacents ou une partie sélectionnée des points adjacents.

Conformément à l'algorithme d'optimisation DP, le calcul des courants de charge unitaire, par exemple I1 à I9, est opéré de maille à maille itérativement à partir d'un point initial Mi,j jusqu'à atteindre un point cible final prédéterminé Mm,n. Pour ce premier mode de réalisation, le passage d'une boucle de calcul à l'autre est réalisé de pas à pas en variation d'état de charge SOC du maillage.

Par ailleurs, selon ce premier mode de réalisation dit hors ligne, et comme cela est visible en figure 4, on fera remarquer que les boucles de calcul réitératif des courants de charge unitaire I1 à I9 de point à point se déroulent en chemin inverse (souvent désigné par calcul « backward » pour des algorithmes DP en anglais) par rapport à la variation de charge et de température qui se produirait normalement lors de la charge électrique du système de batterie. En effet, le calcul des courants de charge unitaire en variation de charge et de température descendante est réalisé conformément à l'exécution d'une recherche d'optimisation d'un algorithme d'optimisation récursif DP. Par conséquent, le point initial a une valeur d'état de charge comprise entre 70% et 100% d'état de charge du système de batterie, et de préférence 80% d'état de charge. Le point cible final Mm,n prédéterminé a une valeur d'état de charge comprise entre 0% et 20% d'état de charge de la batterie, de préférence 5% d'état de charge.

Le calcul d'un courant unitaire I1, I2, I3 est réalisé à partir d'un modèle électrique du système de batterie et des contraintes électriques du système. En figure 5, on a représenté un modèle électrique de Foster d'ordre n pouvant être utilisé à titre d'exemple. De plus, les contraintes électriques imposées limitant la valeur d'un courant unitaire sont notamment la température acceptable, le courant maximum acceptable, la tension maximale, ainsi que la valeur de puissance de la borne de recharge. Ces données sont reçues en information d'entrée pour opérer le procédé comme cela est illustré en figure 2. On notera que généralement le courant maximum acceptable est contraint par la valeur du courant maximal d'une cellule, dépendant de l'état de charge SOC du système de batterie, et par la valeur du courant maximal de la borne, (par exemple 400A sur des bornes de 350kW). L'une ou l'autre de ces deux dernières valeurs impose la limite maximale.

En référence à la figure 4, on précise que le courant de charge unitaire I1 correspond au courant de charge constant permettant un changement d'état du système de batterie du point Mi,j associé à un état de température j et état de charge SOC i, vers le point adjacent Mi-1, j associé à un état de même valeur de température j mais à un état de charge SOC de valeur inférieure i-1 conformément à la résolution du maillage. Le courant de charge unitaire I2 correspond au courant de charge constant permettant un changement d'état du système de batterie du point Mi,j, associé à un état de température j et état de charge SOC i, vers le point adjacent Mi-1, j-1 associé à un état de de température de valeur inférieure j-1 et un état de charge SOC de valeur inférieure i-1 conformément à la résolution du maillage.

La valeur d'un courant de charge unitaire est calculable par l'intermédiaire de ces deux équations suivantes fournissant une équation du second degré dont la résolution permet d'obtenir le courant de charge permettant le passage d'un point à un point adjacent. Les variations de température et de SOC dépendent du nombre de mailles correspondant au changement d'état du module de batterie.
- M.cp.dTbat/dt = R.i² + hs(Teau-Tbat),
- et dSOC/dt = I/C,
où dSOC/dt est la variation d'état de charge d'une maille, M est la masse du système de batterie, Cp est la capacité calorifique, dTbat/dt est la variation de température d'un point à un point adjacent, R est la résistance électrique du système de batterie fonction de l'état de charge et de la température instantanée, i est le courant de charge unitaire, H.S est le coefficient d'échange thermique multiplié par la section d'échange, Tbat est la température instantanée du système de batterie, Teau est une variable fixe, par exemple 30°C.

A partir de la valeur du courant de charge unitaire pour le passage d'un point à un point adjacent, le procédé détermine une durée unitaire pour opérer la variation de charge sous l'action dudit courant de charge unitaire lors dudit passage de point à point. Cette durée unitaire sera exploitée par la suite pour calculer la valeur du critère d'optimisation des plans de charge pour atteindre un point cible.

Ensuite, à une troisième étape E03 du procédé de charge, le procédé comporte la détermination des plans de charge PCn définissant une suite de valeurs de courant de charge unitaire de valeur constante permettant d'atteindre un point cible depuis une point initial à travers une pluralité de mailles intermédiaires.

En référence à la figure 4, le point initial Mi,j et le point cible Mi-3,j-3, qu'on rappelle être celle d'une boucle de calcul réitératif, délimitent la variation en état de charge SOC de plusieurs plans de charge. Les plans de charge PC1, PC2, PC3 entre les points Mi,j et Mi-3,j-3, sont constitués respectivement des consignes de courants [I1, I4, I7], [I2, I5, I8] et [I3, I6, I9].

Ensuite, à une quatrième étape E04, le procédé comporte le calcul d'un critère d'optimisation COPn pour chaque plan de charge PCn dépendant de la variation de température T et d'état de charge SOC du plan de charge permettant de choisir le plan de charge optimal. Dans ce premier mode de réalisation hors ligne, le critère d'optimisation est la durée d'un plan de charge. La durée de charge n'est pas un critère obligatoire. On verra que pour le deuxième mode de réalisation le critère d'optimisation est une variable de variation de charge SOC. On rappelle de plus que le calcul du critère d'optimisation est exécuté pour chaque boucle de calcul de l'algorithme d'optimisation DP tant que le point cible final prédéterminé Mm,n n'est pas atteint.

En référence à la figure 4, on fera remarquer que PC1 et PC3 présentent tous deux des plans de charge où la variation de température est stagnante sur une partie du plan de charge, I1 pour PC1 et I6, I9 pour PC3. Par conséquent, cela est indicatif d'une durée de charge COP1, COP3 pouvant être élevée pour PC1 et PC3 respectivement, tandis que PC2 montre une variation de température constante à variation de charge SOC égale. Une variation faible ou nulle de température sur un tronçon d'un plan de charge peut être indicatif d'une saturation du courant de charge, et par conséquent d'une durée élevée.

Ensuite, pour chaque point cible, le procédé comporte une cinquième étape de sélection E05 du plan de charge optimal en fonction du critère d'optimisation COPn de chaque plan de charge PCn. A cet effet, le procédé compare la durée de charge de chaque plan de charge et sélectionne le plan de charge ayant la durée la plus faible. Toujours en référence à la figure 4, on prend l'hypothèse que le plan de charge PC2, présente une durée de charge COP2 inférieure aux plan PC1 et PC3. Le procédé sélectionne donc le plan PC2, identifié comme étant le plan optimal en considération du critère d'optimisation de durée de charge pour atteindre le point cible Mi-3,j-3 à partir du point initial Mi,j.

De nouveau, on rappelle que les étapes E01 à E05 sont exécutées itérativement de pas à pas en variation d'état de charge descendante selon le maillage pour chaque boucle de calcul de l'algorithme d'optimisation DP tant que le point cible final prédéterminé Mm,n n'est pas atteint. Dans une variante préférentielle du premier mode de réalisation, les points initiaux peuvent être un des points associés à des états de charge SOC du module de batterie de 80% par exemple, et les points cibles finaux peuvent être un des points associés à des états de charge SOC de 5%.

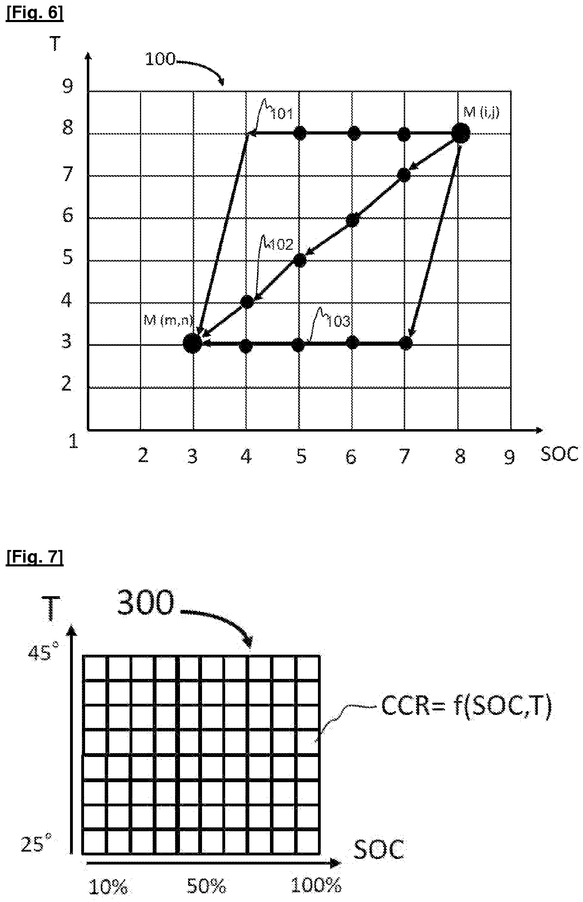

En référence à la figure 6 où on a représenté, schématiquement de manière simplifiée pour une meilleure compréhension, le maillage 100 entre un point initial Mi,j, pour 80% d'état de charge SOC et 45° Celsius par exemple, et un point cible final Mm,n, pour par exemple 5% de SOC et 25° Celsius. Le procédé s'illustre dans cette figure à la dernière boucle de calcul où trois plans de charge 101, 102, 103 sont représentés. Le plan 102 est ici le plan optimal présentant la durée de charge la plus faible. Dans ce mode de réalisation, le point initial est choisi de préférence à un état de charge maximal et à une limite maximale de température du module de batterie afin d'autoriser des valeurs de courant les plus élevées permises par le module de batterie. D'autres valeurs sont envisageables.

Par ailleurs, conformément à la mise en œuvre de l'algorithme d'optimisation DP, pour chaque point du maillage, le procédé comporte l'enregistrement, en mémoire de l'unité de commande du BMS, du critère d'optimisation du plan de charge optimal, ici la durée du plan de charge selon le premier mode de réalisation. Puis, le procédé comporte la sélection du plan de charge optimal entre le point initial Mi,j et le point cible final prédéterminé Mm,n, en fonction du critère d'optimisation de chaque point intermédiaire intégrant le plan de charge du point cible final Mm,n. De cette manière, le procédé économise des ressources de calcul en réutilisant les valeurs des critères d'optimisation déjà calculées de chaque boucle de calcul intermédiaire avant d'atteindre la boucle finale.

Ensuite, une fois que le point cible final Mm,n du maillage est atteint, le procédé comporte une étape E06 d'enregistrement dans une mémoire de l'unité de commande du système BMS d'une table de consigne de courant de charge, ladite table mémorisant, pour chaque point, la dernière valeur de la suite de courant de charge unitaire du plan de charge optimal permettant d'atteindre chaque dit point. Dans ce premier mode de réalisation de calcul hors ligne, la table de consigne est la cartographie délivrant une consigne de courant de charge CCR en fonction de la valeur d'état de charge SOC et de température instantanée.

Toujours en référence à la figure 4, où le point cible est le point Mi-3,j-3, pour ce point, le plan optimal sélectionné est le plan PC2 du fait qu'il présente la durée la plus faible pour parcourir la variation de charge définie par ledit plan dans une plage de température acceptable. Le courant de charge unitaire enregistré dans la table de consigne pour le point Mi-3,j-3 est alors la valeur du courant de charge unitaire I8. On rappelle que dans ce cas d'exemple, le point Mi-3,j-3 est un point intermédiaire entre le point initial Mi,j et point cible final prédéterminé.

Enfin, la table de consigne de courant enregistre pour toutes (ou une partie) des points du maillage 100, la dernière valeur de la suite de courant de charge unitaire du plan optimal permettant d'aboutir aux dits points.

Lorsque la détermination de la cartographie est exécutée par un calculateur externe au véhicule (par exemple en usine), cette table est enregistrée dans une plate-forme de configuration du système de batterie et est ensuite configurée dans une mémoire de l'unité de commande du BMS lors de la fabrication du véhicule. La cartographie peut être mise en à jour en cours de vie du véhicule, soit par le véhicule s'il embarque un programme configuré pour mettre en œuvre la totalité du procédé de charge, soit par un module de mis à jour.

En figure 7, on a représenté schématiquement un exemple d'une cartographie 300 permettant de délivrer la consigne de courant de charge optimal qui est enregistrée en mémoire du système de batterie du véhicule. Cette cartographie indexe une plage d'état de charge SOC et une plage de température T, par exemple ici allant de 0% à 100% de SOC et de 25°C à 45°C. La cartographie délivre une valeur de courant de charge CCR en fonction de la valeur instantanée d'état de charge SOC et de température T système de batterie du véhicule. La finesse de la cartographie 300 est directement liée à la finesse du maillage 100.

Il est envisageable pour simplifier les calculs de la cartographie que des cases puissent contenir des valeurs par défaut, sur une ligne ou colonne entière par exemple. En effet, on envisage que des plages de valeurs de SOC et de température seront configurées par une unique valeur de courant de charge unitaire optimal, quelle que soit l'état de vieillissement de la batterie ou quel que soit le critère d'optimisation.

On rappelle que les étapes E01 à E06 sont exécutées préalablement au déclenchement d'une charge électrique, soit en usine avant sa mise en circulation, soit en cours de vie du véhicule. Une fois que le véhicule est amené à une borne de recharge des informations sont communiquées entre le véhicule et la borne, notamment les courants de charge compatibles. Une fois que la recharge est déclenchée, le procédé de charge comporte la détermination E07 de la consigne de courant de charge CCR par lecture de la cartographie en fonction de la valeur d'état de charge SOC et de température instantanée délivrée par le système de batterie BMS. Cette consigne de courant de charge CCR est ensuite transmise en temps réel à la borne en fonction des valeurs instantanées d'état de charge SOC et de température du système de batterie.

Par ailleurs, selon une variante préférentielle du procédé, lors de l'étape E05, la sélection du plan de charge optimal entre le point initial et le point cible final prédéterminé Mm,n est fonction du coefficient de réglage 613, mentionné en figure 2. A partir de la valeur du critère d'optimisation COPn, le procédé sélectionne un plan de charge dont la durée est fonction de la valeur du coefficient de réglage configurant le compromis entre la durée de charge par rapport au niveau de vieillissement subi.

Selon le procédé, la valeur du coefficient de réglage 613 évolue proportionnellement à l'incrémentation du compteur de charge rapide 601, de manière à réduire le niveau de vieillissement au fur et à mesure que le nombre de charge rapide qui a été comptabilisé augmente. Dans une variante du procédé, la valeur du coefficient de réglage 613 évolue proportionnellement à la valeur des paramètres d'état de vieillissement 609, 610 de manière à réduire le niveau de vieillissement au fur et à mesure que l'état du système de batterie se dégrade.

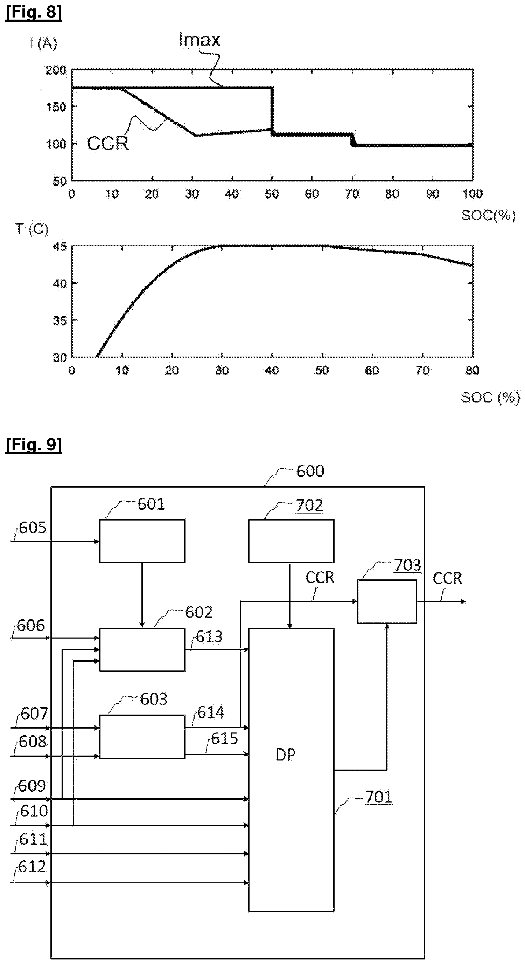

Pour illustrer un test de mise en œuvre du procédé de charge selon l'invention, en figure 8, on a représenté deux graphiques illustrant une séquence de pilotage du courant de charge. Dans la partie supérieure est représenté la consigne de courant de charge CCR transmise à la borne de recharge au cours de la recharge électrique. La valeurs Imax représente la valeur de limitation de courant maximum autorisé en fonction des conditions instantanées. Dans la partie inférieure est représentée l'évolution de la température du système de batterie au cours de la même recharge. Ces graphiques confirment que les contraintes de courant et de température sont respectées. Par on a constaté que la valeur du courant de charge s'adapte en fonction des valeurs des conditions initiales de la recharge en température et état de charge SOC.

Par ailleurs, en modifiant la valeur du coefficient de réglage, les tests ont montré que le procédé de charge permet d'augmenter la durée de vie d'un système de batterie, notamment en augmentant l'acception du nombre de charge rapide.

La figure 9 décrit maintenant un deuxième mode de réalisation du bloc fonctionnel 600 pour la mise en œuvre du procédé de charge dans lequel l'ensemble des étapes sont exécutées lors du déclenchement d'une opération de charge électrique du véhicule. Ce deuxième mode est désigné par mode de calcul « en ligne ». Par conséquent, les calculs du procédé pour délivrer la table des consignes de courant de charge sont dépendants des conditions initiales en température, état de charge SOC et état de vieillissement du système de batterie à l'instant de la recharge et vise à fournir les consignes de courant de charge optimales uniquement pour l'opération de recharge en cours.

Le deuxième mode de réalisation se différencie de la figure 2 en ce qu'il comporte tout d'abord un bloc fonctionnel 701 dont la fonction est de délivrer la table de consigne de courant de charge CCR qui est cette fois uniquement dépendante de la valeur instantanée d'état de charge SOC du système de batterie. Le calcul est réalisé obligatoirement une fois au déclenchement de la charge électrique et peut éventuellement être actualisé lors de la charge. Il est nécessaire de pointer plusieurs différences importantes par rapport au premier mode de réalisation. Ce mode de calcul évite l'enregistrement d'une cartographie de profil de charge visant à répondre à l'ensemble des situations de recharge pouvant être rencontrées par le véhicule, mais en contrepartie doit intégrer les ressources de calcul nécessaires à l'exécution de l'algorithme d'optimisation DP.

Le module 600 comporte dans ce deuxième mode de réalisation un cinquième bloc fonctionnel 702 de planification de la recharge électrique dont la fonction est d'activer le calcul de la table de consigne de courant de charge.

Le module 600 comporte en outre un sixième bloc fonctionnel 703 dont la fonction est de lire la table de consigne de courant de charge en fonction de la valeur instantanée d'état de charge SOC du système de batterie.

La figure 3 permet également d'illustrer la séquence du procédé selon ce deuxième mode de réalisation. Lors de l'étape E01, le bloc fonctionnel 701 enregistre dans une mémoire de l'unité de commande du BMS, un découpage discrétisant une plage de charge du système de batterie sous la forme d'un deuxième maillage en deux dimensions selon un pas de température et le pas d'une variable d'évolution de la charge électrique. Dans ce deuxième mode de réalisation, la variable d'évolution est représentative d'une durée de charge suivant l'instant de déclenchement de la recharge. L'instant de déclenchement est l'instant planifié de début d'application d'un courant de charge aux bornes du système de batterie. Une maille définit une variation de température du module de batterie en charge entre deux valeurs de température et une variation de durée de charge entre deux instants de la charge électrique suivant l'instant de déclenchement.

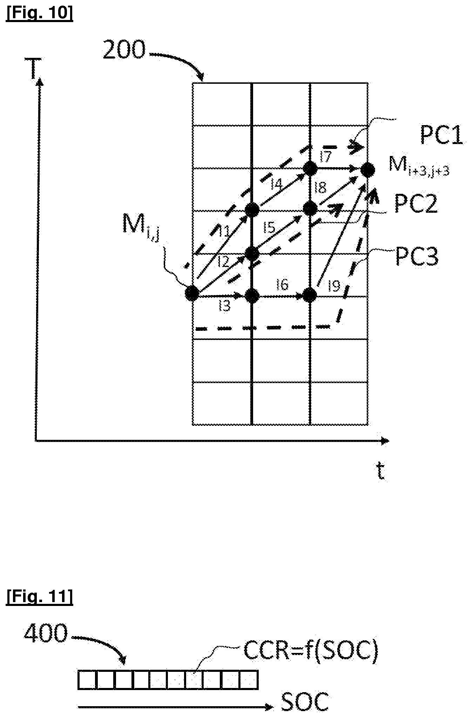

En figure 10, on a représenté schématiquement et de manière simplifiée une partie du deuxième maillage 200 dans lequel des valeurs de la durée de charge t sont représentées sur l'axe des abscisses et des valeurs de température T sont représentées sur l'axe des ordonnées. Chaque point Mi,j est associé à une valeur de température du module de batterie en charge ainsi qu'à une valeur de durée. Le deuxième maillage 200 couvre la plage de charge de température du module de batterie, définie par exemple entre des températures comprises entre 25° et 45° et la duréede charge, pouvant être d'environ 20 minutes pour une charge rapide par exemple. La valeur de la durée de charge définie par le maillage 200 n'est aucunement limitative de l'invention.

Le pas du maillage sur l'axe des températures peut être de quelques dixièmes de degrés Celsius, par exemple entre 0,5 et 1 degrés Celsius, et sur l'axe temporel de l'ordre de la seconde ou minute. On comprendra que la résolution du maillage choisie n'est aucunement limitative et dépend notamment des performances recherchées et des ressources de calcul et de mémoire disponibles au sein du véhicule.

Lors de l'étape E02, le calcul des courants de charge unitaire de valeur constante sur un pas de durée de charge du maillage s'exécute identiquement au premier mode de réalisation (pour les équations, modèle électrique utilisé et contraintes électriques imposées), à la différence que le passage de point à point s'initie au point initial associé à la valeur instantanée de température du système de batterie pour l'instant planifié de déclenchement de la charge électrique, et le point cible final Mm,n prédéterminé a une valeur de durée allant de quelques secondes à plusieurs dizaines de minutes de charge, de préférence environ vingt minutes de charge et correspond à un état de charge planifié du module de batterie compris entre 80% et 90% d'état de charge pour une charge dite rapide dans le cas d'une recharge complète d'un système de batterie. Le procédé s'applique également bien évidement pour des charges incomplètes de courte durée.

Identiquement au premier mode de réalisation, l'algorithme d'optimisation est un algorithme de programmation dynamique DP. L'algorithme est récursif et exécute pour des boucles de calcul itératif de maille à maille allant cette fois dans le sens montant d'une charge électrique relativement à la température et à la durée de charge. On notera que le passage d'une boucle de calcul à l'autre est réalisé de pas à pas en variation de durée définie par le maillage.

En référence à la figure 10, on observe que les plans de charge du point Mi,j au point Mi+3,j+3 sont cette fois ascendant en température et en durée. La figure 10 représente uniquement le calcul des valeurs de courant unitaire I1 à I9 constituant trois plans de charge PC1, PC2, PC3 entre le point initial Mi,j et un point cible Mi-3,j-3. Toutefois, la mise en œuvre du procédé de calcul est réalisée pour tous les points adjacents ou une partie sélectionnée des points adjacents.

Dans ce deuxième mode de réalisation, le procédé comporte également une étape E03 de détermination des plans de charge PCn définissant une suite de valeurs de courant de charge unitaire permettant d'atteindre chaque point cible depuis un point initial à travers une pluralité de mailles intermédiaires.

Ensuite, à la quatrième étape E04, selon ce deuxième mode de réalisation, le procédé comporte le calcul d'un critère d'optimisation COPn pour chaque plan de charge PCn, où ledit critère d'optimisation est la quantité d'énergie rechargée planifiée pour la variation de durée de charge et de température définie par le point initial et le point cible. La variation d'énergie planifiée, ou l'état de charge planifié, d'un plan de charge pour une durée de charge planifiée est enregistrée en mémoire du système de batterie BMS en vue d'élaborer la table consigne de courant de charge.

Ensuite, pour chaque point, lors de la cinquième étape E05, le bloc fonctionnel 701 sélectionne le plan de charge optimal du point en fonction de la quantité d'énergie rechargée de chaque plan de charge PCn. Le plan optimal sera le plan de charge ayant l'augmentation d'état de charge la plus importante.

Identiquement au premier mode de réalisation, la sélection du plan optimal peut être optionnellement dépendante du coefficient de réglage 613 permettant de cette manière de favoriser la quantité d'énergie chargée dans la durée définie par le plan de charge du maillage au détriment du niveau de vieillissement subi par le système de batterie, ou bien de réduire l'impact de la recharge sur le niveau de vieillissement au détriment de la quantité d'énergie, et par conséquent de la durée de charge totale. Le coefficient de réglage peut être également dépendant du compteur de charge rapide, d'un ou plusieurs paramètres d'état de vieillissement du module de batterie ou encore du paramètre configurable manuellement par l'utilisateur pour favoriser la durée de charge ou le niveau de vieillissement subi lors de la recharge.

Ensuite, une fois qu'un point cible final Mm,n prédéterminé du maillage est atteint (par exemple le point du maillage correspondant à environ 80% d'état de charge planifié du module de batterie), à étape E06, l'unité de commande du système de batterie BMS enregistre dans une mémoire du BMS une table de consigne de courant de charge, mémorisant, pour chaque point, la dernière valeur du courant de charge unitaire faisant partie du plan de charge optimal de chaque point et la valeur de la variation d'énergie planifiée qu'il est prévu de recharger pour la durée de charge. Le point cible final Mm,n prédéterminé a une valeur de durée de charge comprise entre 15 minutes et 25 minutes par exemple, de préférence d'environ 20 minutes lorsqu'il s'agit d'une recharge complète du module de batterie.

Dans ce deuxième mode de réalisation, la table de consigne est un vecteur de courant de charge optimal délivrant une consigne de courant de charge CCR en fonction d'une valeur de variation d'énergie planifiée depuis l'instant de déclenchement de la recharge par rapport au niveau d'état de charge SOC initial.

Le bloc fonctionnel 701 transmet le vecteur 400 de courant de charge CCR, comme illustré schématiquement par la figure 11, au bloc 703 qui a pour fonction de communiquer la valeur du courant de charge CCR à la borne de recharge lors de la recharge E07 en fonction de la variation d'énergie mesurée depuis le déclenchement de la recharge, ou en fonction de l'état de charge SOC instantané du système de batterie. Ce vecteur 400 est calculé dès le déclenchement de la recharge et peut être mis à jour durant l'opération de la charge.

## Revendications

1. Procédé de charge électrique d'un module de batterie rechargeable comportant la détermination d'un plan de charge et la commande d'une consigne de courant de charge en fonction dudit plan de charge, **caractérisé en ce qu'**il comporte en outre les étapes successives suivantes :
- a) l'enregistrement (E01) dans une mémoire d'un découpage discrétisant une plage de charge du module de batterie sous la forme d'un maillage (100) en deux dimensions selon un pas de température et un pas d'une variable d'évolution de la charge électrique,
- b) le calcul (E02), pour chaque point du maillage, de valeurs de courant de charge unitaire (I1-I3) correspondant chacune à un changement d'état de température du module de batterie vers chacun des points adjacents (Mi-1,j ;Mi-1,j-1 ;Mi-1,j-3) selon le pas de la variable d'évolution de la charge,
- c) le calcul (E03) pour chaque dit point d'au moins un plan de charge (PC1, PC2, PC3) définissant une suite de valeurs de courant de charge unitaire depuis un point initial prédéterminé (Mi,j) vers chaque dit point,
- d) le calcul (E04) d'un critère d'optimisation pour chaque plan de charge (PC1, PC2, PC3) dépendant de la variation de température du module de batterie pour ledit plan de charge, le critère d'optimisation permettant de sélectionner un plan de charge optimal,
- e) la sélection (E05) en fonction du critère d'optimisation, pour chaque point du maillage, du plan de charge optimal (PC2) définissant une suite de valeurs de courant de charge unitaire (I2,I5,I8),
- f) l'enregistrement (E06) dans une table (300) de consigne de courant de charge, pour chaque point du maillage, de la dernière valeur de courant de charge unitaire (I8) de la suite de valeurs du plan de charge optimal (PC2),
- g) lors de la charge du module de batterie, la détermination (E07) de la consigne de courant de charge par lecture de ladite table en fonction de l'état instantané du module de batterie correspondant à chaque dit point.

2. Procédé selon la revendication 1, **caractérisé en ce que** la sélection e) du plan de charge optimal de chaque point est fonction en outre d'un coefficient de réglage (613) de la durée de charge dudit plan de charge par rapport à un niveau de vieillissement du module de batterie lors de la charge dudit plan de charge.

3. Procédé selon la revendication 2, **caractérisé en ce que** le coefficient de réglage (613) est dépendant d'un compteur de charge (601) activé en cas de détection de l'activation d'un mode de charge prédéterminé dit de charge rapide.

4. Procédé selon la revendication 2 ou 3, **caractérisé en ce que** le coefficient de réglage (613) est dépendant en outre d'au moins un paramètre d'état du module de batterie (609 ;610) représentatif du vieillissement du module de batterie.

5. Procédé selon l'une quelconque des revendications 2 à 4, **caractérisé en ce que** le coefficient de réglage (613) est dépendant en outre d'un paramètre (606) configurable manuellement par l'utilisateur du module de batterie permettant de modifier la durée de charge du plan optimal sélectionné et le niveau de vieillissement.

6. Procédé selon l'une quelconque des revendications 1 à 5, **caractérisé en ce que** chaque point du maillage (100) correspond à une valeur de température du module de batterie (T) et à une valeur d'état de charge (SOC) du module de batterie et **en ce que** le critère d'optimisation est une variable représentative de la durée du plan de charge relativement à la variation de température du plan de charge.

7. Procédé selon la revendication 6, **caractérisé en ce que** la table de consigne de courant est une cartographie (300) délivrant une valeur de consigne de courant (CCR) en fonction de la température (T) et de l'état de charge (SOC) instantanés du module de batterie en charge.

8. Procédé selon la revendication 6 ou 7, **caractérisé en ce que** le plan de charge optimal de chaque point du maillage est un plan de charge inverse dans lequel le point initial (Mi,j) a une valeur d'état de charge comprise entre 70% et 100% d'état de charge du module de batterie, et de préférence 80% d'état de charge.

9. Procédé selon l'une quelconque des revendications 1 à 5, caractérisé en ce chaque point du maillage (200) correspond à une valeur de température du module de batterie (T) et à une valeur de durée de charge (t) du module de batterie à partir d'un instant de déclenchement de la charge, et en ce que le critère d'optimisation est une variable représentative de la variation de quantité d'énergie du plan de charge relativement à la variation de température dudit plan de charge.

10. Procédé selon la revendication 9, **caractérisé en ce que** la table de consigne de courant est un vecteur (400) de consigne délivrant une valeur de consigne de courant (CCR) en fonction de l'état de charge (SOC) instantané du module de batterie en charge.

## Patentansprüche

1. Verfahren zum elektrischen Laden eines wiederaufladbaren Batteriemoduls, das die Bestimmung eines Ladeplans und die Steuerung eines Ladestromsollwerts als Funktion des Ladeplans umfasst, **dadurch gekennzeichnet, dass** es ferner die folgenden aufeinanderfolgenden Schritte umfasst:
- a) das Aufzeichnen (E01) eines Ausfalls in einem Speicher, der einen Ladebereich eines Batteriemoduls in Form eines Netzes (100) in zwei Dimensionen gemäß einem Temperaturschritt und einem Schritt einer variablen Entwicklung der elektrischen Ladung diskretisiert,
- b) die Berechnung (E02), für jeden Punkt des Netzes, von Einheitsladestromwerten (11-13), die jeweils einer Änderung des Temperaturzustands des Batteriemoduls zu jedem der benachbarten Punkte (Mi-1 ,j;Mi-1,j-1;Mi-1,j-3) entsprechend der Schrittweite der Lastentwicklungsvariablen,
- c) die Berechnung (E03) für jeden besagten Punkt mindestens einer Lastebene (PC1, PC2, PC3), die eine Folge von Einheitslaststromwerten von einem vorbestimmten Anfangspunkt (Mi,j) zu jedem besagten Punkt definiert, d) die Berechnung (E04) eines Optimierungskriteriums für jeden Ladeplan (PC1, PC2, P03) in Abhängigkeit von der Temperaturänderung des Batteriemoduls für den Ladeplan, wobei das Optimierungskriterium die Auswahl eines optimalen Ladeplans ermöglicht,
- e) die Auswahl (E05) gemäß dem Optimierungskriterium für jeden Punkt des Netzes des optimalen Lastplans (P02), der eine Folge von Einheitslaststromwerten (12,15,18) definiert,
- f) Aufzeichnung (E06) in einer Ladestromsollwerttabelle (300) für jeden Netzpunkt des letzten Einheitsladestromwertes (18) der Wertefolge des optimalen Ladeplans (P02),
- g) beim Laden des Batteriemoduls die Bestimmung (E07) des Ladestromsollwerts durch Lesen der Tabelle gemäß dem momentanen Zustand des Batteriemoduls, der jedem Punkt entspricht.

2. Verfahren nach Anspruch 1, **dadurch gekennzeichnet, dass** die Auswahl e) des optimalen Ladeplans für jeden Punkt auch eine Funktion eines Anpassungskoeffizienten (613) der Ladedauer des Ladeplans in Bezug auf einen Alterungsgrad der Batterie ist Modul während des Ladens des Ladeplans.

3. Verfahren nach Anspruch 2, **dadurch gekennzeichnet, dass** der Anpassungskoeffizient (613) von einem Ladungszähler (601) abhängt, der aktiviert wird, wenn die Aktivierung eines vorbestimmten Lademodus namens Schnellladung erfasst wird.

4. Verfahren nach Anspruch 2 oder 3, **dadurch gekennzeichnet, dass** der Anpassungskoeffizient (613) auch von mindestens einem für die Alterung des Batteriemoduls repräsentativen Zustandsparameter (609; 610) des Batteriemoduls abhängig ist.

5. Verfahren nach einem der Ansprüche 2 bis 4, **dadurch gekennzeichnet,dass** der Anpassungskoeffizient ( 613 ) auch von einem Parameter ( 606 )abhängig ist, der manuell durch den Benutzer des Batteriemoduls konfigurierbarist, der es ermöglicht, die Belastungsdauer des gewählten zu modifizieren optimalen Plan und den Grad der Alterung.

6. Verfahren nach einem der Ansprüche 1 bis 5, **dadurch gekennzeichnet, dass** jeder Punkt des Netzes (100) einem Temperaturwert des Batteriemoduls (T) und einem Ladezustandswert (SOC) der Modulbatterie und in entspricht dass das Optimierungskriterium eine Variable ist, die die Dauer des Ladeplans relativ zu der Temperaturänderung des Ladeplans darstellt.

7. Verfahren nach Anspruch 6, **dadurch gekennzeichnet, dass** die Stromsollwerttabelle ein Kennfeld (300) ist, das einen Stromsollwert (CCR) in Abhängigkeit von der Temperatur (T) und dem Ladezustand (SOC) von Momentaufnahmen des Batteriemoduls liefert berechnet.

8. Verfahren nach Anspruch 6 oder 7, **dadurch gekennzeichnet, dass** die optimale Belastungsebene jedes Netzpunktes eine inverse Belastungsebene ist, in der der Anfangspunkt (Mi,j) einen Belastungszustandswert zwischen 70% und 100% Zustand aufweist Ladung des Batteriemoduls und vorzugsweise 80% Ladezustand.

9. Verfahren nach einem der Ansprüche 1 bis 5, **dadurch gekennzeichnet, dass** jeder Punkt des Netzes (200) einem Temperaturwert des Batteriemoduls (T) und einem Ladedauerwert (t) des Batteriemoduls von einem Moment an entspricht des Auslösens der Ladung, und dadurch, dass das Optimierungskriterium eine Variable ist, die die Änderung der Energiemenge des Ladeplans relativ zu der Temperaturänderung des Ladeplans darstellt.

10. Verfahren nach Anspruch 9, **dadurch gekennzeichnet, dass** die Stromsollwerttabelle ein Sollwertvektor (400) ist, der einen Stromsollwert (CCR) in Abhängigkeit vom momentanen Ladezustand (SOC) des geladenen Batteriemoduls liefert.

## Claims

1. Method for electrically charging a rechargeable battery module comprising the determination of a charging plan and the control of a charging current setpoint as a function of said charging plan, **characterized in that** it further comprises the successive steps following:
- a) the recording (E01) in a memory of a breakdown discretizing a battery module charge range in the form of a mesh (100) in two dimensions according to a temperature step and a step of a variable evolution of the electric charge,
- b) the calculation (E02), for each point of the mesh, of unit charge current values (11-13) each corresponding to a change in temperature state of the battery module towards each of the adjacent points (Mi-1 ,j;Mi-1,j-1;Mi-1,j-3) according to the step of the load evolution variable,
- c) the calculation (E03) for each said point of at least one load plane (PC1, PC2, PC3) defining a sequence of unit load current values from a predetermined initial point (Mi,j) to each said point, d) the calculation (E04) of an optimization criterion for each charging plan (PC1, PC2, P03) depending on the temperature variation of the battery module for said charging plan, the optimization criterion allowing to select an optimal load plan,
- e) the selection (E05) according to the optimization criterion, for each point of the mesh, of the optimal load plan (P02) defining a sequence of unit load current values (12,15,18),
- f) recording (E06) in a charging current setpoint table (300), for each point of the grid, of the last unitary charging current value (18) of the sequence of values of the optimal charging plan (P02),
- g) when charging the battery module, the determination (E07) of the charging current setpoint by reading said table according to the instantaneous state of the battery module corresponding to each said point.

2. Method according to Claim 1, **characterized in that** the selection e) of the optimal load plan for each point is also a function of an adjustment coefficient (613) of the load duration of said load plan with respect to a level of aging of the battery module during the charging of said charging plan.

3. Method according to Claim 2, **characterized in that** the adjustment coefficient (613) is dependent on a charge counter (601) activated in the event of detection of the activation of a predetermined charge mode called fast charge.

4. Method according to Claim 2 or 3, **characterized in that** the adjustment coefficient (613) is also dependent on at least one battery module state parameter (609; 610) representative of the aging of the battery module.

5. Method according to any one of Claims 2 to 4, **characterized in that** the adjustment coefficient (613) is also dependent on a parameter (606) configurable manually by the user of the battery module making it possible to modify the duration of load of the selected optimal plan and the level of aging.

6. Method according to any one of Claims 1 to 5, **characterized in that** each point of the mesh (100) corresponds to a temperature value of the battery module (T) and to a state of charge value (SOC) of the module battery and **in that** the optimization criterion is a variable representative of the duration of the charging plan relative to the temperature variation of the charging plan.

7. Method according to Claim 6, **characterized in that** the current setpoint table is a map (300) delivering a current setpoint value (CCR) as a function of the temperature (T) and the state of charge (SOC) snapshots of the battery module being charged.

8. Method according to Claim 6 or 7, **characterized in that** the optimal load plane of each point of the mesh is an inverse load plane in which the initial point (Mi,j) has a load state value of between 70% and 100% state of charge of the battery module, and preferably 80% state of charge.

9. Method according to any one of Claims 1 to 5, **characterized in that** each point of the mesh (200) corresponds to a temperature value of the battery module (T) and to a charging duration value (t) of the battery module from a moment of triggering of the charge, and **in that** the optimization criterion is a variable representative of the variation in the quantity of energy of the charge plan relative to the variation in temperature of said charge plan.

10. Method according to Claim 9, **characterized in that** the current setpoint table is a setpoint vector (400) delivering a current setpoint value (CCR) as a function of the instantaneous state of charge (SOC) of the battery module in charge.
